# EUROPEAN PATENT APPLICATION

(11) **EP 2 806 370 A1**
(43) Date of publication of application: **26.11.2014**
(21) Application number: 13168563.8
(22) Date of filing: 21.05.2013
(51) Int. Cl.: G06F 21/32, G06F 21/35

(54) **Portable authentication tool and method**

(71) Applicant: Knightsbridge Portable Communications SP, George Town, Grand Cayman (KY)
(72) Inventor: Daniels, Lewis, Llantrisant, CF72 8LP Wales (GB)
(74) Representative: Sonn & Partner Patentanwälte

(57) **Abstract**

A security system (1) and a method for managing authorization comprising an authorizing device (3) configured to perform a user authentication, which authorizing device (3) comprises a first wireless transmission unit (5) configured to provide a wireless authorization signal to an application (2) in the proximity of the authorizing device (3), wherein the authorizing device (3) is configured to receive a lock signal and revoke any authorization and disable any authorization signals in response to the lock signal.

## Description

The invention concerns a security system, as well as a method for operating a security system, comprising an authorizing device configured to perform a user authentication, which authorizing device comprises a first wireless transmission unit configured to provide a wireless authorization signal to a receiver in the proximity of the authorizing device. In particular, the invention relates to mobile, personal applications, especially "smart" devices such as mobile phones, tablet computers, devices and applications for personal information management, laptops and mobile storage applications.

The use of mobile applications for private or otherwise confidential matters goes hand in hand with suitable means to protect the information potentially accessible through such applications by third parties. The most common means to provide some access control include locking, i.e. denying access to, the respective application unless the present user is actively authorized to use it. In practice, such authorization can usually be obtained by an authentication procedure performed by the application itself, which often involves e.g. entering a personal identification number (PIN) or a gesture. The disadvantage of this method is that the authentication information, e.g. the correct PIN or gesture, must be accessible from the application. In particular, the application holds the authentication template, which must be matched for successful authentication, as well as the authentication tokens entered by authorized users. Therefore, in case an unauthorized third party gains access to the application, it can gain access by reconstructing the correct token either from the template or from previously entered tokens, e.g. by simply observing an authorized user or by reading traces he left behind.

In order to improve the security of such applications, it has been proposed to require a physical authentication token separate from the application, e.g. a smart card. A successful authentication usually requires the physical token to be within a limited range or within direct contact. The WO 2013/054072 A1 describes such a physically separate, limited-range communication device, which is used to authorize financial transactions. It provides a one-time password to the application, which is a communication equipment such as a mobile phone. The password is transmitted via a wireless connection from the communication device to the communication equipment. However, as the communication device does not perform any authentication, duplication of the token allows access to the application. Also, the use of one-time passwords involves the risk of rendering the application useless, in case the password or the token is lost or damaged. On the other hand, a fixed password may be compromised much more easily.

The US 2006/0170530 A1 shows a fingerprint scanner for remote authorization of an application, which avoids the necessity to provide the application, which may be controlled by a third party, with information on biometric features of the authorized user. At the same time, the biometric authentication avoids problems related to the loss of a one-time password or compromise of a stored secret. The authentication is performed on and the authorization granted by the authorization device. The device then grants authorization to any nearby application, i.e. the authentication is not initialized by the application and therefore the authentication on the device is not specific to one application requesting authorization.

On the other hand, the WO 2013/049413 A1 proposes an indirect authentication procedure, wherein the application, represented by a display device, can be authorized by a separate authorizing device. The authentication, which is initialized by the display device, is not achieved by the mere presence of a physical token (i.e. the authorizing device), but the user is authenticated on the authorizing device. Hence, an authentication-based access control can be implemented without the necessity of an authentication on the display device itself in the presence of a third party, which would compromise the security of the application. However, if the physical token is compromised, authorization may be gained in a similar manner as for applications performing direct authentication.

The known security systems have in common that the authorizing device can be either avoided altogether, permanently compromised or irrecoverably damaged by a third party. Notably, none of the known systems provides means to actively revoke an authorization after grant, either because they are transaction-based and do not authorize a continuous unlocked mode or because access to the application to locally lock it is not an issue. It is therefore object of the invention, to provide a security system and propose a method, which eliminates the weaknesses of the prior art. In particular, it is an object of the invention to provide a mobile security system which can be actively locked and/or disabled and a method to operate such a system.

The above-mentioned problems are solved according to the present invention by a security system of the type as defined at the outset, wherein the authorizing device is configured to receive a lock signal and disable any authorization signals in response to the lock signal. Effectively this corresponds to providing means for entering and leaving at will a protected mode of the application.

Correspondingly, the weaknesses observed with the prior art solutions can be eliminated according to the present invention by a method comprising the steps of:
sending a authorization request from an application to an authorizing device;
performing a user authentication at the authorizing device and granting an authorization if the authentication is successful;
transmitting a wireless authorization signal from the authorizing device to the application if the authorization is granted; and
revoking the authorization and disabling transmission of the authorization signal upon reception of a lock signal by the authorizing device.

The authorization request may be a connection request according to a universal communication protocol (e.g. for Bluetooth or Wi-Fi connections) and the respective authorization signal be a confirmation according to the same protocol, effectively establishing the requested connection. The user authentication may be used to set or unlock a network key employed for such a connection, i.e. granting the authorization can be equivalent to enabling access to a network key. Alternatively, the authorization request and/or the wireless authorization signal may be dedicated messages, wherein the authorization signal preferably comprises configuration data relevant for a subsequently established connection between the application and the authorizing device, such as a network key or a certificate. Said configuration data may be pre-set and permanently stored in the authorizing device or generated by the authorizing device on-demand.

The lock signal as conceived by the present invention therefore allows to revoke an already granted authorization. This is particularly useful if the authorization has been obtained with a compromised authorizing device or if access to the application is lost and the application can not be actively locked locally. The lock signal may be triggered by a message transmitted to the authorizing device or it may be triggered by a condition or event observed by the authorizing device, such as breach or loss of a connection, a time-out or the absence of a repeated ping signal.

For cases when neither the application nor the authorizing device is directly accessible, it is advantageous that the authorizing device further comprises a second wireless transmission unit configured to receive a message or command triggering the lock signal. The lock signal can therefore be issued remotely and the security system can be locked irrespective of its location. The first and second wireless transmission units are formed integral with the authorizing device. Both transmission units may be implemented by separate components or by a single component within the authorizing device.

Preferably, the first wireless transmission unit provides only a short-range connection, in particular with a maximum range below 100 m, preferably below 10 m, while the second wireless transmission unit provides a long-range connection, in particular with a range above 100 m. In this way, if authorization requests are received only on the first wireless transmission unit, it can be guaranteed that authorization requests may only be received from nearby applications, effectively avoiding access from more remote applications, while at the same time enabling remote lock-down of the authorizing device. In a preferred embodiment, the short-range connection may be a Bluetooth connection, a Near Field Communication (NFC) connection, a direct WiFi connection, an RFID connection or a Zigbee connection, while the long-range connection may be to a Wide Area Network, a cellular network or a broadcast radio network, and the second wireless transmission unit may be a receiver-only unit. For instance, the authorizing device may provide a 3G/4G connection through the second wireless transmission unit, such that the authorizing device is configured to receive a remote kill command via said connection, triggering the lock signal.

The inventive method may therefore comprise the step of establishing an authorization link between the authorizing device and the application prior to transmitting the wireless authorization signal and revoking the authorization upon interruption of said link, wherein the maximum range of the authorization link without interruption is below 100 m, preferably below 10 m. Hence, the authorization is conditional to the proximity of the application to the authorizing device, i.e. separation of the authorizing device from the application automatically breaks the link and consequently revokes the authorization. This is particularly useful for cases when the authorized user forgets or is forcefully detained from manually issuing the lock signal or otherwise revoking the authorization. In other words, the lock signal may be triggered by a lost or breached connection, such as a Bluetooth connection, causing the closure (e.g. entering a protected mode) of the application.

In an advantageous embodiment, the second wireless transmission unit is configured to provide remote access to the authorizing device. Remote access in this context means that the authorizing device may be manipulated remotely. In particular this includes removing information stored inside the authorizing device, e.g. configuration parameters, authorization tokens, such as certificates, or authentication templates, such as fingerprint data, or performing a factory reset. The remote access does not require any direct user interaction with the authorizing device. In a preferred embodiment, availability of remote access (e.g. sufficient reception of the second wireless transmission unit) may be a requirement for successful authorization through the authorizing device. Hence, forcefully disabling the second wireless transmission unit, e.g. by manipulation or by specific shielding, stops any authorization and therefore does not degrade the security of the present system.

To avoid later reconstruction and re-enabling of the authorizing device, it is desirable that the the authorizing device is configured to be permanently disabled in response to a kill signal. Said kill signal essentially corresponds to a permanent lock signal, i.e. it triggers a lock signal and at the same time modifies the authorizing device such that authorization can no longer be obtained by authentication. Accordingly, the above method may further comprise the step of permanently disabling the authorizing device upon reception of a kill signal. A permanent effect can be achieved by deleting information necessary for authentication or authorization, or intentionally damaging required components inside the authorizing device. Consequently, further authentication with the authorizing device is prevented. For instance, the authorizing device may erase sensitive data, such as certificates or sensitive user data, stored in the authorizing device in response to the kill signal. The possibility of disabling the authorizing device in this manner achieves a security level similar to that of a one-time password while at the same time avoiding the possibility of irrecoverable loss of access, since an authentication template may be re-initialized by the authorized user, while a one-time password can not be reconstructed. The kill signal may be triggered via local or remote user interaction, in particular by a kill command wirelessly transmitted to the authorizing device through the second wireless transmission unit. A breach or loss of connection between the application and the authorizing device, while possibly triggering the lock signal, does not trigger the kill signal. In general, unintentionally or abusively triggering the kill signal shall be avoided due to the permanent and possibly unrecoverable consequences.

For the intended mobile application, it is particularly advantageous to achieve a compact realization of the authorizing device. To nevertheless implement a powerful authentication mechanism, it has turned out beneficial that the user authentication interface comprises biometric authentication means, preferably a fingerprint reader. Biometric authentication means can often be built in a very compact fashion, compared to other human input devices. Additionally, the authentication can be performed quickly while still providing a wealth of authentication features and it is hard to duplicate by an unauthorized third party, even if a successful authentication has been witnessed. To this effect the user authentication at the authorizing device, when performing the present method, includes the scanning of a biometric feature of the user. Alternatively or additionally, the authentication interface may comprise a wireless smart card reader - possibly corresponding to a third wireless transmission unit - such that the authentication can be performed through a smart card swipe on the authorizing device. The third wireless transmission unit may be a separate component within the authorizing device or it may be implemented by a universal component together with the first and/or second wireless transmission unit. In one embodiment, a power button of the authorizing device may be used as a NFC contact for this purpose.

If the authorizing device is configured to wirelessly receive an authorization request, the handling of the authorizing device can be greatly simplified. Also, the whereabouts or even the mere presence of the authorizing device can be covered to potential intruders. The reception of the authorizing request may be possible through the first transmission unit or the second transmission unit.

The security of the application can be further enhanced if the authorizing device comprises a signalling unit configured to provide visual, acoustic and/or haptic notifications to a user. In this instance, the carrier of the authorizing device may be notified of a pending authentication. Consequently, he is notified also upon an unauthorized attempt to gain access to the application and can react correspondingly. The inventive method can therefore further comprise the step of notifying a user of the pending authentication after reception of the authorization request by the authorizing device.

In a further embodiment, the authorizing device comprises a data storage connected to the first wireless transmission unit. Access to this data storage may be controlled from the application and/or the authorizing device. In particular, access to the data storage may require user authentication. The functioning and authorization procedures of said storage and the relevant parts of the authorizing device may correspond to the method and device disclosed in EP 2 365 459 A2, the content of which is hereby included.

In order to avoid unwanted or invalid authorization requests, the inventive method may further comprise the step of performing a pre-authentication of the user at the application before sending the authorization request from the application to the authorizing device. In particular, the contact information required to transmit the authorization request may in this way be protected from general accessibility. Said pre-authentication may effectively be a first authentication step at the beginning of the complete authorization procedure. This first authentication of the application may require the user to enter a password or use a smart card. It may for instance be performed via NFC. Optionally, an additional authentication step may be performed by the authorizing device, possibly also via NFC, e.g. where a power button of the authorizing device is configured to act as NFC contact. This additional authentication may be used to enable an otherwise disabled secure network provided by the authorizing device.

The security of the authorization procedure implemented by the present method may be further improved if the method comprises the step of disabling all networking interfaces of the application other than an interface necessary for communication with the authorizing device before sending the authorization request from the application to the authorizing device and, if applicable, after performing a pre-authentication. In this manner, any remote access to the application during authorized access can be effectively avoided if it is not manually permitted and enabled. The disabling of network interfaces at least comprises closing any existing network connections. When all network connections are closed, the application may start to search for a secure network and establish a secure network connection, e.g. with the authorizing device. In a preferred embodiment, the secure network connection is a direct connection, e.g. limited to the close proximity of the authorizing device, effectively preventing access to/from other, potentially insecure peers. On the side of the authorizing device, the secure network connection may be enabled on-demand, e.g. by an additional authentication step (see above) or by a generic user interaction, e.g. by pressing a button or the like. By closing in particular any long-range connections, the whereabouts of the authorizing device in relation to the application can be verified, i.e. this provides an additional level of security: as the authorizing device is specifically personal and intended to be used by one individual person, the application can be unlocked only if the holder of the authorizing device is present. The application can therefore verify, who is using it and can for example record this information together with the location and the time of the use.

To rapidly detect unusual behaviour of the authorizing device and also to provide information supporting a decision concerning the activation of a kill signal, it is has been found desirable, that the authorization procedure further comprises the step of transmitting a report message from the authorizing device to a supervisor subsequent to an authentication attempt at the authorizing unit, wherein the report message preferably contains one or more of the time and location of the authentication attempt, an identification of the employed authorizing device and/or a representation of the employed authentication token (e.g. a forensic image of a scanned finger print or the like). The report message may be encrypted and the supervisor may be an application running on a predefined server or a device controlled by the authorized user, preferably located independently from the authorizing device and reachable via one or more wireless connections. In particular, the report message may be transmitted via the second wireless transmission unit. The invention will be defined in more detail below by means of preferred exemplary embodiments, to which it is not to be limited to, however, and with reference to the drawings. In detail:
Fig. 1 shows a schematic diagram of the components of a preferred embodiment of the security system;
Fig. 2 is a perspective view of a host device comprising an application connected to an exemplary authorizing device;
Fig. 3 is a flowchart depicting an authorization procedures in accordance with the present invention; and
Fig. 4 is a schematic view of an alternative embodiment of the security system with a supervisor and a remote control device.

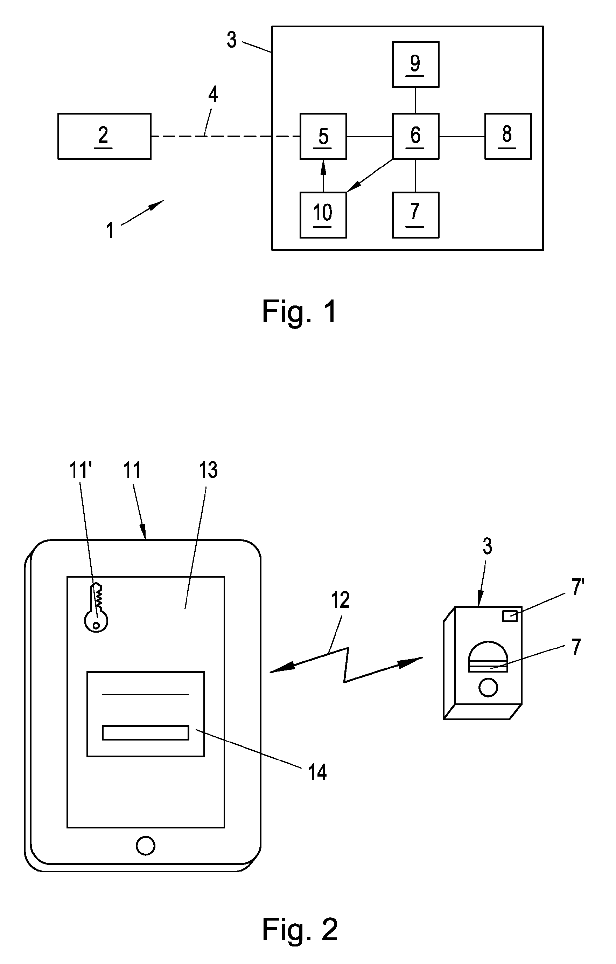

The security system 1 displayed in Fig. 1 comprises an application 2 and an authorizing device 3. Between the application 2 and the authorizing device 3, a wireless connection 4 is indicated by a dashed line. The wireless connection 4 connects the application 2 with a first transmission unit 5 of the authorizing device 3 and is a short-range connection, meaning that the distance between the physical instances of the application 2 and the first transmission unit 5 is limited to a certain range. This range is determined by the type of the connection 4 and the transmission power on both sides of the connection 4. It can preferably by configured by adjusting the respective transmission powers to achieve just the maximum range observed for common use-cases. The maximum range of the connection 4 may for instance be limited to personal surroundings (e.g. 1-3 m) or the same room (e.g. 4-10 m).

The first transmission unit 5 is connected to a secure processor 6, which implements the foreseen authorization procedure, including an authentication of the user holding the authorizing device 3. The authentication is performed by means of a fingerprint reader 7 included in the authorizing device 3. The fingerprint reader 7 is connected with and controlled by the secure processor 6, wherein the secure processor 6 holds the fingerprint templates of all authorized users. In order to request the user to authenticate himself using the fingerprint reader 7, the authorizing device 3 comprises a signalling unit 8, which includes a vibrating alert (not shown).

Furthermore the secure processor 6 is connected to a second wireless transmission unit 9 independent from the first wireless transmission unit 5. The second wireless transmission unit 9 is configured to receive a kill signal and forward it to the secure processor 6. The secure processor 6, in response to the kill signal, permanently deletes any stored fingerprint templates and then issues a lock signal, instructing the first transmission unit 5 to revoke any granted authorization and drop the connection 4. Optionally the secure processor instructs the signalling unit 8 to issue an alarm, e.g. by generating an alarm sound. In a more advanced embodiment, the second transmission unit 9 enables a remote access to the secure processor 6. The secure processor 6 may for instance be re-programmed to initialize an alternative connection between the first transmission unit 5 and the application 2 and send a reset signal to the application 2. In response to the reset signal, the application 2 may seal itself, e.g. by encrypting any data stored thereon with a special sealing key, such that it may not even be accessed when authorized by the authorizing device 3. Besides, the authorizing device 3 further includes a data storage 10 external to the secure processor 6. This data storage 10 may be accessed only after approval and unblocking through the secure processor 6 through the first wireless transmission unit 5.

In Fig. 2, a preferred implementation of the present security system is represented by a tablet computer 11 and a physically separate authorizing device 3. The tablet computer 11 is an off-the-shelf component, running a pre-installed operating system. The application 2 of the present invention in this case comprises a software component 11', which makes use of the general-purpose hardware components installed with the tablet computer 11, effectively turning the tablet computer 11, 11' into an application 2 in the sense of Fig. 1. Naturally, the tablet computer 11 serves as a mere example and any general-purpose hardware, in particular any mobile, personal application, e.g. a mobile phone, a laptop computer etc., may in this way be used as an application 2 instead of the tablet computer 11. The connection 4 between the application 2 and the authorizing device 3 is represented by a duplex wireless signal 12 in Fig. 2.

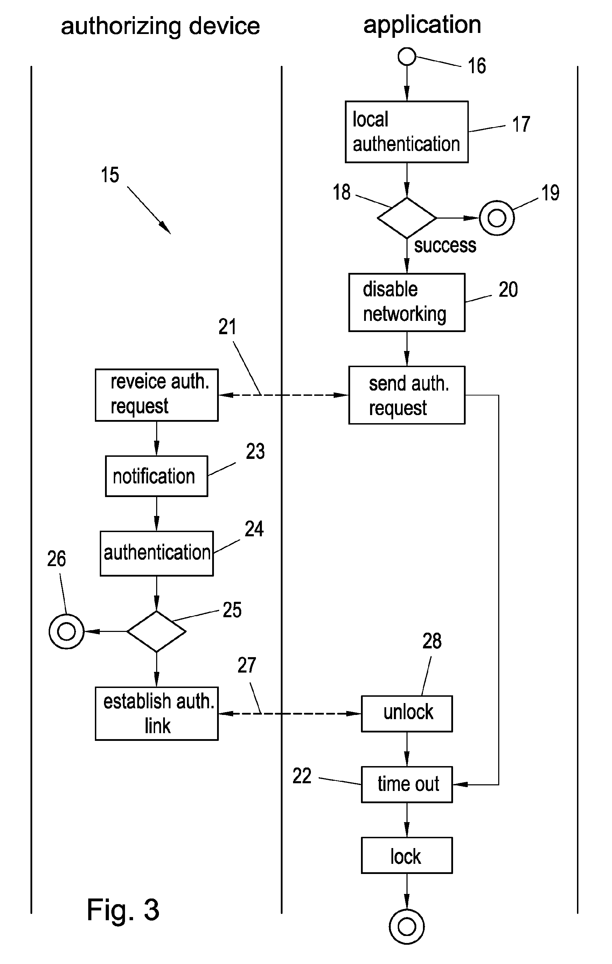

As further illustrated by Fig. 2, the software component 11' uses a touch screen 13 of the tablet computer 11 to implement a local pre-authentication interface 14. As a first step of the authorization process 15 (s. Fig. 3), the user has to interact with the pre-authentication interface 14 before the application 2, i.e. the tablet computer 11, 11', contacts the authorizing device 3. The pre-authentication helps to avoid repeated notifications of the authorizing device 3 due to accidental operation of the tablet computer 11, e.g. if the tablet computer 11 is publicly accessible. The pre-authentication is preferably optional and may be disabled by an authorized user. The authorizing device 3, apart from the fingerprint reader 7, comprises means to issue a lock signal and revoke an authorization, represented by a revoke button 7'. The revoke button 7' issues a lock signal, which intercepts a current connection 12. Preferably, the lock signal issued by the revoke button 7' does not permanently disable the authorizing device 3, i.e. it is not a kill signal.

The steps of a preferred authentication process 15 according to and implemented by the present invention are represented in Fig. 3. The "swim-lanes" of the flowchart indicate if the respective actions are performed by the application 2 (righthand lane) or by the authorizing device 3 (left-hand lane). Characteristically, the starting point 16 is on the side of the application 2, i.e. any authorization must be initialized by the application 2 and can not be initialized or prepared by the authorizing device 3. The first action of the process 15 is a local authentication 17 performed by the application 2. This local authentication 17 may serve as a means of pre-authentication as explained in connection with Fig. 2. The flow of the process 15 is determined by the condition 18, whether the local authentication 17 was successful or not. In the latter case, the process comes to an early end point 19 without involving the authorizing device at all. If the local authentication 17 is successful, the next action 20 is to disable all network connections and/or networking interfaces of the application 2 except those needed for the connection 4 between the application 2 and the authorizing device 3 (cp. Fig. 1) and for sending an authorization request 21. Once the network connection and/or interfaces are disabled, the application 2 sends the authorization request 21 to the authorizing device 3 and waits for a response. The request 21 may be sent via a short-range connection, addressing the first transmission unit 5 of the authorizing device 3, or via a long-range connection, addressing the second wireless transmission unit 9. If no response or reaction from the authorizing device 3 is received within a configured duration of a time-out event 22, the application 2 again enters a fully locked state as before the local authentication 17.

The authorizing device 3 on the other hand at the start of the process 15 waits for a authorization request 21. Once the request 21 is issued, it receives the request and performs a notification 23 of the user holding the authorizing device 3. For reasons of simplicity, further time-outs, e.g. while waiting for the authentication, are omitted and can be foreseen by one skilled in the art. The depicted process 15 assumes that the user performs the authentication 24 in response to the notification 23. The result of the authentication 24 determines the condition 25: if the authentication 24 failed, i.e. the recorded authentication token (fingerprint etc.) did not match a stored template, the process 15 is interrupted in another early end point 26. Otherwise, if the authentication is successful, the authorizing device 3 tries to establish a link 27 from the first transmission unit 5 to the application 2. The waiting application 2, which previously sent the authorization request 21, can accept the link 27 and performs the unlock 28 of the application 2, e.g. entering an unlocked state and granting access to otherwise protected data stored on the application 2. The application 2 then remains in the unlocked state as long as the link 27 is upheld. The link 27 may be actively resolved, e.g. by user request on the application 2 or by a lock signal issued on the authorizing device 3 or by a lock or kill command sent to the authorizing device via the second wireless transmission unit 9, or passively, e.g. by exceeding the connection range of the connection 4, over which the link 27 is established. Once the link is resolved, the application 2 experiences a time-out 22 and returns into the locked state, again denying access to whatever is protected by the present security system.

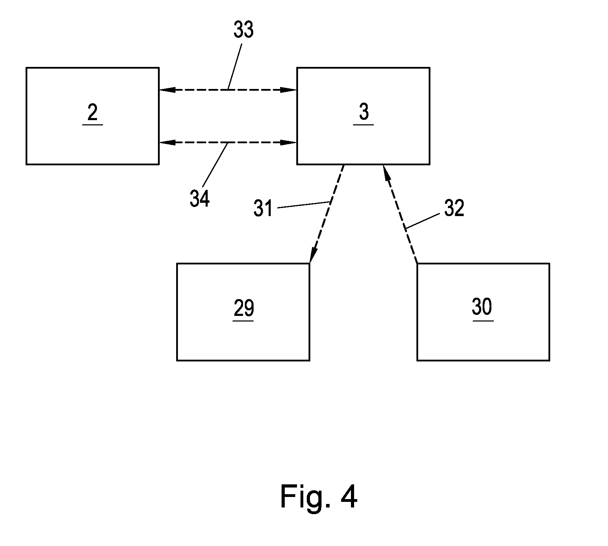

The security system presented in Fig. 4, besides the application 2 and the authorizing device 3, comprises a supervisor 29 and a remote control device 30. The supervisor 29 is a centralized server configured to receive a report message from the authorizing device via a remote connection 31. The report message may contain information characterizing one or more authentication attempts performed at the authorizing device 3 and/or the application 2. The purpose of the report message is to protocol successful and/or unsuccessful authentication attempts. The information thus available to the supervisor 29 may be used to detect misuse of the security system and possibly identify the culprit. Therefore, the report message may contain data pertaining to the time and location of the attempts as well as the employed authentication token(s), in particular if the authentication was unsuccessful. For successful authentications, the report message may be suppressed or it may contain only portions of the above-mentioned data.

The authorizing device 3 is further configured to receive a kill message from the remote control device 30 via a wireless connection 32. The remote control device 30 can be a conventional cell phone and the kill message can be a SMS or MMS message. The kill message should be required to contain an authentication token such as a PIN to prevent abusive kill messages. The kill message, upon reception at the authorizing device 3 and successful verification of the contained authentication token, triggers a kill signal, permanently disabling the authorizing device. The kill signal erases all sensitive data stored on the authorizing device and triggers a lock signal. Therefore, the kill signal revokes any present authorization and also renders any future authorization impossible. Recovery of the authorizing device in this situation is only possible from a backup of the stored data, if available. Furthermore, the authorizing device 3 may be configured to receive a lock message from the remote control device 30 via the wireless connection 32. The lock message - while otherwise similar to a kill message - triggers only a lock signal but no kill signal on the authorizing device.

In Fig. 4, there are two separate wireless connections 33, 34 indicated between the application 2 and the authorizing device 3. The first connection 33 is a network connection used to initiate the authorization procedure. It is established via a network provided by the authorizing device 3, once the authorizing device 3 is turned on. After authentication at the application 2, e.g. with a PIN or by swiping a smart card, the application 2 closes any pre-existing network connections and searches for the network provided by the authorizing device 3. Once the application 2 finds the network, it tries to establish the first connection 33. For the authorizing device 3 to accept this connection, the user has to authenticate on the authorizing device, as previously described. Upon successful authentication, the authorizing device 3 generates a key for the second connection 34 and transmits it to the application 2 via the first connection 33. Upon reception of this key, the application 2 again closes the first connection 33 and now tries to establish the second connection 34 using the key just received. The authorizing device 3 accepts this second connection 34 only if the newly generated key is provided. Once this second connection 34 is established, the user is granted authorization to use a protected mode of application 2 or access protected data stored on the authorizing device. The authorization is coupled to the second connection 34, meaning that a breach or loss of the second connection 34, which is preferably a short-range Bluetooth connection, results in revocation of the authorization, locks the protected mode, e.g. by closing the application 2. In the event that a lock signal is received by the authorizing device 3, it closes the second connection 34 and therefore immediately blocks access to the application 2.

## Claims

1. A security system (1) comprising an authorizing device (3) configured to perform a user authentication, which authorizing device (3) comprises a first wireless transmission unit (5) configured to provide a wireless authorization signal to an application (2) in the proximity of the authorizing device (3), **characterized in that** the authorizing device (3) is configured to receive a lock signal and disable any authorization signals in response to the lock signal.

2. The system (1) according to claim 1, **characterized in that** the authorizing device (3) further comprises a second wireless transmission unit (9) configured to receive the lock signal.

3. The system (1) according to claim 2, **characterized in that** the first wireless transmission unit (5) provides only a short-range connection, in particular with a maximum range below 100 m, preferably below 10 m, while the second wireless transmission unit (9) provides a long-range connection, in particular with a range above 100 m.

4. The system (1) according to claim 2 or 3, **characterized in that** the second wireless transmission unit (9) is configured to provide remote access to the authorizing device (3).

5. The system (1) according to one of claims 1 to 4, **characterized in that** the authorizing device (3) is configured to be permanently disabled in response to a kill signal.

6. The system (1) according to one of claims 1 to 5, **characterized in that** the authorizing device (3) comprises biometric authentication means, preferably a fingerprint reader (7).

7. The system (1) according to one of claims 1 to 6, **characterized in that** the authorizing device (3) is configured to wirelessly receive an authorization request (21).

8. The system (1) according to one of claims 1 to 7, **characterized in that** the authorizing device (3) comprises a signalling unit (8) configured to provide visual, acoustic and/or haptic notifications to a user.

9. The system (1) according to one of claims 1 to 8, **characterized in that** the authorizing device (3) comprises a data storage (10) connected to the first wireless transmission unit (5).

10. The system (1) according to one of claims 1 to 9, **characterized in that** the authorizing device (3) is configured to transmit a report message to a supervisor (29), wherein the report message contains one or more of the time and location of an authentication attempt, an identification of the authorizing device (3) and/or a representation of a token employed in the authentication attempt.

11. A method comprising the steps of:
sending a authorization request (21) from an application (2) to an authorizing device (3);
performing a user authentication (24) at the authorizing device (3) and granting an authorization if the authentication is successful;
transmitting a wireless authorization signal from the authorizing device (3) to the application (2) if the authorization is granted; and
revoking the authorization and disabling transmission of the authorization signal upon reception of a lock signal by the authorizing device (3).

12. The method of claim 11, further comprising the step of establishing an authorization link (27) between the authorizing device (3) and the application (2) prior to transmitting the wireless authorization signal and revoking the authorization upon interruption of said link, wherein the maximum range of the authorization link (27) without interruption is below 100 m, preferably below 10 m.

13. The method of claim 11 or 12, further comprising the step of permanently disabling the authorizing device (3) upon reception of a kill signal.

14. The method of one of claims 11 to 13, further comprising the step of notifying a user of the pending authentication after reception of the authorization request by the authorizing device (3).

15. The method of one of claims 11 to 14, **characterized in that** the user authentication at the authorizing device (3) includes the scanning of a biometric feature of the user.

16. The method of one of claims 11 to 15, further comprising the step of performing a pre-authentication (17) of the user at the application (2) before sending the authorization request (21) from the application (2) to the authorizing device (3).

17. The method of one of claims 11 to 16, further comprising the step of disabling all networking interfaces of the application (2) other than an interface necessary for communication with the authorizing device (3) before sending the authorization request (21) from the application (2) to the authorizing device (3) and, if applicable, after performing a pre-authentication (17).

18. The method of one of claims 10 to 16, further comprising the step of transmitting a report message from the authorizing device to a supervisor subsequent to an authentication attempt at the authorizing device, wherein the report message preferably contains one or more of the time and location of the authentication attempt, an identification of the employed authorizing device and/or a representation of the employed authentication token.
